# FASCICULE DE BREVET EUROPEEN

(11) **EP 1 194 283 B1**
(45) Date de publication et mention de la délivrance du brevet: **23.02.2005**
(21) Numéro de dépôt: 00951615.4
(22) Date de dépôt: 20.06.2000
(51) Int. Cl.: B29D 11/00

(54) **PROCEDE DE MOULAGE DE LENTILLES OPHTALMIQUES**
VERFAHREN ZUM GIESSEN VON OPTHALMISCHEN LINSEN
METHOD FOR MOULDING OPHTHALMIC LENSES

(30) Priorité: 22.06.1999 FR 9907936
(43) Date de publication de la demande: 10.04.2002
(73) Titulaire: ESSILOR INTERNATIONAL COMPAGNIE GENERALE D'OPTIQUE, 94227 Charenton cédex (FR)
(72) Inventeur: MERCIER, Jean-Louis, F-94300 Vincennes (FR)
(74) Mandataire: Cabinet Hirsch
(86) Numéro de dépôt international: PCT/FR2000/001695
(87) Numéro de publication internationale: WO 2000/078531

(56) Documents cités:
- EP-A- 0 371 621
- WO-A-89/11966
- WO-A-98/36868
- FR-A- 1 128 971
- JP-A- 1 109 321
- US-A- 3 881 683

## Description

L'invention concerne les lentilles moulées, et plus précisément, un procédé de moulage de lentilles ophtalmiques.

Les lentilles ophtalmiques en verre organique - en matière polyyérisée - sont utilisées pour la correction optique; elles sont montées à cet effet dans des montures. Un des problèmes qui se pose pour de telles lentilles est celui de leur fabrication.

CA-A-0 596 660 propose un procédé et un dispositif de moulage de lentilles en résine thennodurcissable. Ce document propose de mouler les lentilles entre deux moules en verre trempé à faces parallèles ; les moules sont circulaires, et sont séparés à leur périphérie par un joint annulaire souple ou rigide, dont l'épaisseur correspond à l'épaisseur finale de la lentille. L'ensemble permet de mouler les lentilles sans que la résine ne soit au contact de l'air lorsqu'elle est chauffée. Ce document mentionne les problèmes de retrait de la résine lorsqu'elle est chauffée, d'isolation de l'air ambiant pour la polymérisation. FR-A-1 128 971 propose d'utiliser pour le moulage des moules en quartz.

FR-A-1 166 582 décrit un procédé et un appareil de moulage de lentilles; l'appareil présente un poinçon inférieur, en verre et/ou en métal, et un poinçon supérieur; ce document suggère que le poinçon inférieur s'étende au-delà du bord du poinçon supérieur, de sorte à ménager une réserve pour un excès de monomère à polymériser. Comme le document propose de chauffer le monomère en partant du centre du poinçon, la présence de l'excès de résine permet de compenser le retrait au voisinage des surfaces de moulage des poinçons. Ce document mentionne en outre que le rebord de la lentille est rugueux du fait de l'aménagement de la réserve, et doit ensuite être poli.

US-A-5 288 221 propose une solution à un autre problème. Ce document a pour objet de résoudre les problèmes posés par la fabrication de lentilles ophtalmiques par collage de deux préformes ("wafers" en langue anglaise) l'une sur l'autre. Ce collage est une opération difficile à mettre en oeuvre du fait notamment des impuretés et des bulles dans la colle; en outre, il est nécessaire dans une telle solution de disposer d'un grand nombre de préformes. Il est donc proposé, dans ce document, de mouler une lentille sur l'une des préformes : lors de la polymérisation, le matériau polymérisable s'assemble avec la préforme pour constituer la lentille. Pour effectuer le moulage, ce document américain propose d'utiliser un joint annulaire, disposé autour de la préforme. Un support positionne le moule à une distance connue de la préforme, de sorte à pouvoir durcir le matériau polymérisable. Il est encore suggéré dans ce document que le moule présente une taille légèrement inférieure à celle de la préforme: ceci permet de remplir en excès la cavité pour éviter les bulles, et que le matériau en excès s'échappe entre la périphérie du moule et le joint annulaire. EP-A-0 371 621 décrit un autre procédé de fabrication de lentilles par collage de deux préformes. Ce document propose de mouler sur l'avant d'une préforme un support, pour permettre ensuite la manipulation et l'usinage de la préforme. Le support est détaché de la préforme après qu'elle a été usinée et collée à la deuxième préfonne.

WO-A-89 11966 soulève le problème de l'usinage des surfaces des lentilles ophtalmiques. Ce document propose de fournir des demi-moules en plastique, évitant tout usinage ultérieur de la surface des lentilles; les demi-moules sont utilisés pour le moulage de lentilles; il est uniquement nécessaire d'usiner ces lentilles à la forme de la monture, sans usinage de surface. Le problème soulevé dans ce document est celui de l'usinage de surface, mais le détourage n'est absolument pas mentionné, ni même suggéré.

L'art antérieur décrit donc les problèmes associés au moulage d'un matériau polymérisable visqueux, qui se rétracte lors de la polymérisation.

US-A-4 693 446 décrit une cavité de moulage pour lentilles ophtalmiques. Celle-ci est formée de deux demi-moules en verre et d'un tube en plastique flexible, de forme généralement cylindrique. Le tube est muni, sur sa surface intérieure, d'un épaulement contre lequel les deux demi-moules viennent s'appuyer pour définir la cavité de moulage. Pour le moulage de lentilles présentant un astigmatisme, on prévoit sur le tube des marques permettant le positionnement angulaire relatif des demi-moules. Le tube présente aussi des trous d'injection du matériau à polymériser. La lentille obtenue dans une telle cavité de moulage est circulaire.

US-A-4 919 850 décrit une cavité de moulage du même genre; toutefois, au lieu que les demi-moules s'appuient contre un épaulement du tube, il est prévu dans la surface intérieure du tube des rainures.

EP-A-0 371 621 décrit un procédé de fabrication d'une lentille bifocale. On moule d'abord dans un moule circulaire une lentille; la face arrière de la lentille est ensuite usinée. Ces opérations sont conduites en usine. Chez l'opticien, on colle sur la face avant cette lentille un élément de vision de loin, puis l'ensemble ainsi collé est détouré pour l'adapter à la forme d'une monture.

US-A-3 881 683 propose un procédé de moulage de lentilles ophtalmiques. Ce document cherche à résoudre le problème de l'épaisseur des bords des lentilles de puissance négative. Il propose un joint annulaire présentant des sièges destinés à recevoir des demi-moules; la présence de ces sièges diminue les risques de rupture des demi-moules en verre. Ce document propose aussi d'adapter la forme du joint pour diminuer l'épaisseur du bord des lentilles. Dans tous les cas subsiste nécessairement une étape d'usinage de la lentille pour l'adapter à la forme de la monture; le document indique que le procédé est mis en oeuvre sans pertes sur le diamètre final de la lentille. On obtient donc une lentille circulaire, qu'il faut encore adapter à la forme de la monture. Ce document vise exclusivement le problème des lentilles de puissance négative, et ne mentionne ni les autres lentilles, ni le problème de la forme des lentilles.
JP-A-1 042 222 décrit un procédé de fabrication de lentilles, dans lequel des moules avant et arrière rigides et circulaires sont fixés sur des parois de moules avant et arrière d'un joint ou garniture en matériau élastique. Un polymère est injecté dans la cavité et est polymérisé pour former la lentille. On obtient après démoulage une lentille avec des motifs tri-dimensionnels décoratifs sur la paroi latérale. Les figures montrent une découpe non-circulaire dans le joint ou garniture.

L'invention se pose le nouveau problème du produit obtenu lors du moulage. Elle repose sur la constatation que les lentilles ophtalmiques fournies aux opticiens nécessitent diverses opérations pour être adaptées à la forme de la monture choisie par le porteur - qu'il s'agisse d'une monture classique cerclée, ou d'une monture plus moderne ne faisant pas le tour complet de la lentille. La lentille destinée à être montée dans la monture peut être obtenue soit par usinage et détourage d'un verre semi-fini, soit par détourage d'un verre fini. Dans le premier cas, l'opération de surfaçage de la face arrière est coûteuse; dans le second cas, la lentille obtenue n'est pas optimisée en termes d'épaisseur.

En outre, le matériau polymérisable est cher : une quantité importante du matériau utilisé lors du moulage est gâchée, dans la mesure où elle est ensuite éliminée lors du détourage, et éventuellement du surfaçage.

Enfin, les procédés classiques posent un problème, plus particulièrement pour la fabrication de lentilles convexes, pour lesquelles l'épaisseur de la lentille est plus importante au centre de la lentille qu'à sa périphérie. Les lentilles finies sont fabriquées dans les procédés de l'art antérieur en fixant l'épaisseur de la lentille à sa périphérie, par exemple à une valeur de 1 mm comme proposé dans US-A-5 288 221. Après détourage, notamment pour les lentilles de forte correction, l'épaisseur de la lentille sur sa périphérie est importante. Les lentilles obtenues présentent l'inconvénient d'être plus épaisses que nécessaire, et donc plus lourdes et inesthétiques..

L'invention permet d'améliorer l'allure d'une lentille moulée adaptée à la forme de la monture, notamment pour les fortes corrections; elle fournit une lentille qui à puissance égale est moins épaisse que les lentilles adaptées à la forme de la monture par détourage de verres finis. Elle assure que la lentille est d'un poids plus faible, et améliore ainsi le confort des porteurs. L'invention propose un procédé moins coûteux que celui utilisé classiquement pour la fabrication de telles lentilles à partir de produits semi-finis. Elle économise le matériau polymérisable, et facilite la fabrication par moulage. Elle permet de supprimer l'étape d'usinage, et d'obtenir une lentille dont l'épaisseur est optimisée par rapport à la forme de la monture, et par rapport à la prescription du porteur.

Pour résoudre ces problèmes nouveaux et obtenir ces avantages, l'invention propose un procédé de moulage d'une lentille de forme non circulaire adaptée à la prescription d'un porteur et à la forme de la monture choisie par le porteur, comprenant les étapes de:
- fourniture d'un premier moule non-circulaire sensiblement à la forme de la lentille à obtenir, ou de la monture à obtenir ;
- fourniture d'un second moule;
- moulage et durcissement d'un matériau durcissable entre le premier moule et un second moule;
- démoulage de la lentille obtenue.

Dans un mode de réalisation, l'étape de fourniture d'un premier moule comprend une étape de détourage du dit moule.

Dans un autre mode de réalisation, l'étape de durcissement est une étape de durcissement partiel, et le procédé comprend en outre une étape de durcissement complet de la lentille.

Dans un autre mode de réalisation, l'étape de moulage et durcissement comprend une étape d'assemblage des moules suivie d'une étape de durcissement.

Avantageusement, l'étape de durcissement partiel dure moins de 3 minutes.

De préférence, l'étape de durcissement complet dure entre 5 et 30 minutes.

Dans encore un autre mode de réalisation, le procédé présente une étape d'enlèvement de dispositifs de positionnement des moules après l'étape de durcissement partiel, et avant l'étape de durcissement complet.

Avantageusement, l'étape de durcissement partiel comprend une irradiation du matériau durcissable, de préférence par irradiation depuis un seul côté de l'assemblage des premier et second moules.

Dans un mode de réalisation, l'étape de durcissement complet comprend une irradiation du matériau durcissable, de préférence par irradiation depuis les deux côtés de l'assemblage des premier et second moules.

De préférence, l'étape de durcissement complet comprend le chauffage du matériau durcissable.

Avantageusement, l'étape de démoulage comprend l'application à l'assemblage des premier et second moule d'un choc thermique.

Dans un mode de réalisation, le procédé présente une étape de fourniture d'un second moule à la forme de la lentille à obtenir.

Dans ce cas, l'étape de fourniture d'un second moule peut comprendre une étape de détourage du dit moule.

De préférence, la lentille est une lentille ophtalmique.

D'autres caractéristiques et avantages de l'invention apparaîtront à la lecture de la description qui suit de modes de réalisation de l'invention, donnée à titre d'exemple et en référence aux dessins annexés qui montrent:
- figure 1 une représentation en coupe d'un assemblage selon l'invention ;
- figure 2 une représentation en perspective de l'assemblage de la figure 1 ;
- figure 3 une représentation en vue de dessus d'un assemblage selon l'invention;
- figure 4, un graphe de l'épaisseur au bord d'une lentille fabriquée selon l'invention.

L'invention propose comme dans l'art antérieur de mouler une lentille en matériau polymérisable entre deux moules; elle propose en outre de détourer avant le moulage au moins l'un des deux moules, pour lui donner une forme voisine de celle de la forme de la lentille détourée.

L'invention permet de la sorte de limiter la quantité de materiau polymérisable utilisée, et d'optimiser l'épaisseur de la lentille finale en fonction de la forme de la monture et de la prescription du porteur. On peut atteindre un gain de matériau polymérisable de l'ordre de 60% par rapport au procédé classique utilisant une lentille semi-finie..

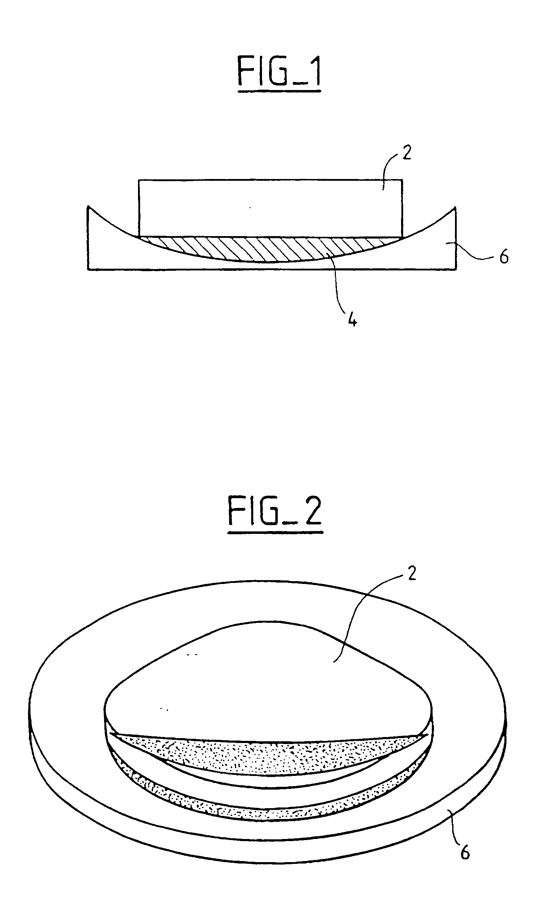

On décrit en référence aux figures un mode de réalisation préféré de l'invention, dans lequel on ne détoure que le moule supérieur. La figure 2 montre une représentation en coupe d'un assemblage selon l'invention; cet assemblage comprend un premier moule 2, qui est dans l'exemple le moule supérieur, et un second moule 6 qui est le moule inférieur. Entre ces moules est coulé un matériau durcissable 4, par exemple une composition durcissable telle que celles décrites dans le brevet US-A-5 702 825 de la demanderesse. Plus généralement, on peut utiliser pour la mise en oeuvre de l'invention les matériaux durcissables connus en soi, et par exemple des matériaux thermo-durcissables, voire des thermoplastiques; dans ce dernier cas, on adapte de préférence le dispositif; on pourrait dans ce cas utiliser la technique de l'injection compression. Le moule convexe, généralement en métal, détouré à la forme de la monture, pourrait être réutilisé.

Comme le montre la figure, et comme cela apparaît mieux à la figure 1, le second moule 6 est un moule circulaire, du genre de ceux couramment utilisés aujourd'hui pour le moulage des lentilles ; il peut notamment s'agir d'un moule en verre, en métal, en céramique ou en plastique, comme ceux décrits dans les documents de l'état de la technique cités plus haut. Il présente un diamètre voisin de 80 mm , proche du diamètre des lentilles connues de l'art antérieur.

En revanche le premier moule 2 de la figure 1 présente un contour qui est sensiblement celui de la lentille à obtenir. On entend par "sensiblement" la forme de la lentille une forme permettant le détourage ultérieur éventuel de la lentille pour permettre par exemple d'éliminer de petits défauts périphériques de moulage, ou encore un détourage du périmètre de la lentille pour son montage dans une monture spécifique. Une valeur de quelques millimètres autour de la forme intérieure requise par la monture est adaptée. Dans tous les cas, il ne s'agit que d'un détourage de finition, sur quelques millimètres ou moins; il ne s'agit pas d'un enlèvement important de matière, comme celui qui est nécessaire pour passer d'une lentille circulaire de diamètre compris entre 60 et 80 mm à une lentille présentant la forme de la monture ― qui peut avoir des côtes Boxing A et B de 30 à 40 mm. L'enlèvement de matière est alors d'au moins 1 cm.

Le contour peut être quelconque, et dépend en fait de la nature de la monture choisie par l'utilisateur final de la lentille. La taille maximale du moule entre deux points de son périmètre est inférieure au diamètre du second moule. Le premier moule est avantageusement obtenu par détourage avant le moulage du matériau durcissable, par exemple par détourage à l'aide d'une meule classique d'un moule circulaire; on peut avantageusement utiliser une meule du type de celles décrites dans le brevet US-A-4 59G 091 de la demanderesse.

On peut utiliser pour le premier moule un matériau quelconque; dans la mesure où le moule est d'un usage unique, ou sinon très limité, il est avantageux que son prix soit aussi limité; une solution simple consiste à utiliser un moule en thermoplastique ou thermodurcissable, comme par exemple du polycarbonate ou du poly(carbonate d'allyldiéthylène glycol).

Les premier et second moules sont assemblés à l'aide d'un appareil connu en soi, pour le moulage et le durcissement du matériau durcissable; on peut de ce point de vue appliquer l'enseignement de l'art antérieur, et par exemple utiliser des dispositifs de maintien en position des moules du genre de ceux décrits dans les brevets de l'an antérieur cités plus haut. On peut prévoir un joint annulaire autour du premier moule, si nécessaire, et notamment dans le cas de lentilles concaves. Si le second moule n'est pas détouré. on peut l'utiliser comme réserve de matière pour le moulage.

A l'inverse de fart antérieur, l'invention permet d'obtenir une épaisseur nulle ou très faible sur le périmètre de la lentille. On peut par exemple ajuster la position des moules de sorte à ce qu'ils soient en contact en un point de la périphérie du premier moule, ou à ce qu'ils soient à une distance de 1 mm ou moins à la périphérie du premier moule. Il est clair que la position des moules, comme dans l'art antérieur, est fonction de la prescription.

On peut procéder pour le moulage comme suit :
- mise en place du second moule ;
- le cas échéant, positionnement d'un joint annulaire ;
- mise en place du matériau durcissable dans le second moule ; la quantité de matériau peut être calculée à l'avance;
- mise en place du premier moule ; cette séquence permet de bien éliminer les bulles, mieux qu'une injection du matériau entre les moules ; celle-ci reste toujours possible ;

Pour durcir le matériau, on procède de façon connue en soi. On peut aussi procéder en plusieurs étapes, par exempte :
- irradiation, par exemple aux ultraviolets, pour figer le matériau durcissable ; on peut qualifier cette étape de durcissement partiel ;
- démontage de l'appareillage de maintien des moules ;
- durcissement complet, par exemple par chauffage au four ; on peut assurer un contrôle précis de température, et ainsi limiter les retraits en assurant un bon durcissement. On peut aussi procéder au durcissement complet par irradiation aux ultra-violets.

Dans un cas typique, le durcissement partiel peut suivre l'assemblage des moules; il dure normalement moins de 3 minutes, ce qui suffit pour assurer que l'assemblage formé des moules ne bouge pas. En revanche, l'étape de durcissement complet peut durer entre 5 et 30 minutes.

On peut ensuite assurer le démoulage de la lentille présentant la puissance et la forme requises pour le porteur et sa monture, par exemple par choc thermique de l'assemblage contenant la lentille de l'invention.

La figure 1 montre une représentation en perspective d'un assemblage selon l'invention ; comme pour la figure 1, on n'a pas représenté l'appareillage de maintien des moules. On voit bien sur la figure que le premier moule présente une forme sensiblement identique à la forme d'une monture, tandis que le second moule présente une taille plus importante, et adaptée à servir de réservoir de matière.

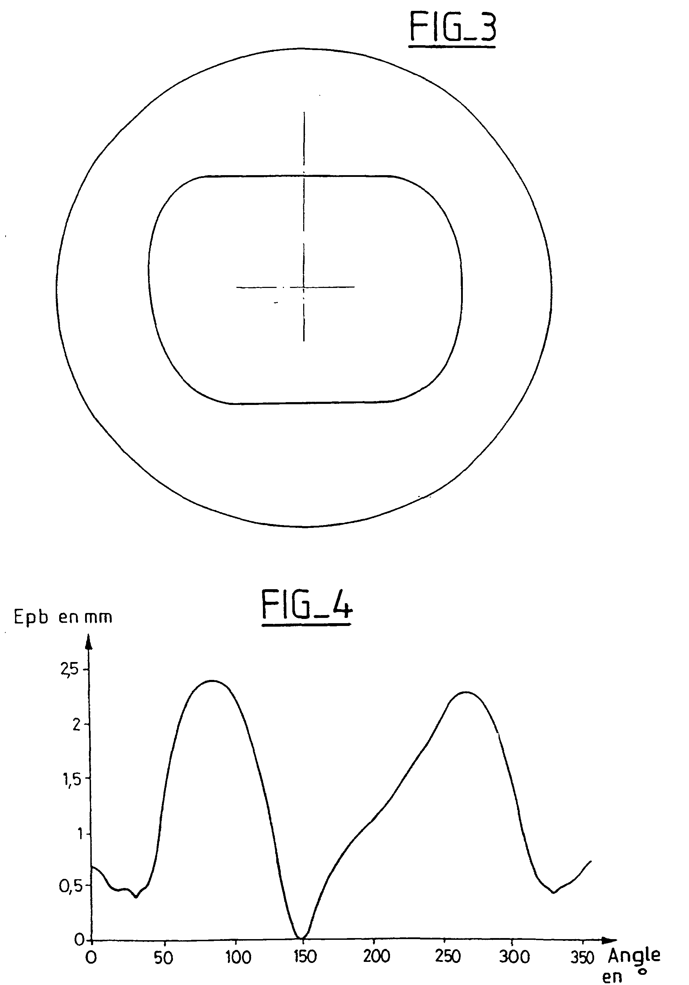

La figure 3 montre une représentation en vue de dessus d'un assemblage selon l'invention; il s'agit du cas d'une lentille de puissance + 6,00 dioptries, en un matériau durcissable d'indice 1,5, sans décentrement. En négligeant l'influence de l'épaisseur du centre de la lentille - qui est un terme du second ordre dans la correction, on obtient pour un second moule avec une base de 8 dioptries et un rayon de 62,5 mm un premier moule présentant la forme de la figure, avec un rayon de courbure de 250 mm. La dimension maximale du premier moule est de 53,2 mm pour la fonne de monture choisie.

La figure 4 montre un graphe de l'épaisseur d'une lentille fabriquée à l'aide du moule de la figure 3 . On a porté en ordonnées l'épaisseur en millimètre, et en abscisses l'angle. L'épaisseur varie entre 0 et 2,4 mm. A titre de comparaison, dans une lentille classique détourée, l'épaisseur pour cette prescription et cette forme de monture varie entre 3,5 et 5.9 mm.

Pour le moule convexe, qui est dans l'exemple des figures le moule détouré, on peut faire varier la base par pas de 0,12 dioptries. Pour le cylindre, un pas de 0,25 dioptries serait acceptable. Pour une gamme de puissance de 1 dioptrie, et une gamme de cylindre de 1 à 3 dioptries, on pourrait alors fournir 8 x 12, c'est-à-dire 96 moules différents. Pour le moule concave, il n'y a pas de changement par rapport au procédé de fabrication classique, et on utilise le nombre de moules nécessaire pour couvrir la gamme, en addition et en puissance.

Bien entendu, la présente invention n'est pas limitée aux exemples et modes de réalisation décrits et représentés, mais elle est susceptible de nombreuses variantes accessibles à l'homme de l'art. On pourrait comme proposé dans US-A-5 288 221 utiliser pour l'un des moules une préforme qui doit faire partie de la lentille: dans ce cas, le procédé de l'invention permet encore de limiter la quantité de matériau.

On pourrait aussi détourer les deux moules avant le moulage.

L'invention s'applique non seulement à des prescriptions classiques - sphériques ou avec un tore - mais aussi à la fabrication de lentilles multifocales, progressives ou non. Le second moule est dans ce cas un moule asphérique multifocal.

## Revendications

1. Un procédé de moulage d'une lentille de forme non-circulaire adaptée à la prescription d'un porteur et à la forme de la monture choisie par le porteur, comprenant les étapes de:
- fourniture d'un premier moule (2) non-circulaire sensiblement à la forme de la lentille à obtenir ;
- fourniture d'un second moule (6);
- moulage et durcissement d'un matériau durcissable (4) entre le premier moule et un second moule (6);
- démoulage de la lentille obtenue.

2. Le procédé selon la revendication 1, **caractérisé en ce que** l'étape de fourniture d'un premier moule comprend une étape de détourage du dit moule.

3. Le procédé selon la revendication 1 ou 2, **caractérisé en ce que** l'étape de durcissement est une étape de durcissement partiel, et **en ce qu'**il comprend en outre une étape de durcissement complet de la lentille.

4. Le procédé selon la revendication 1, 2 ou 3, **caractérisé en ce que** l'étape de moulage et durcissement comprend une étape d'assemblage des moules suivie d'une étape de durcissement.

5. Le procédé selon la revendication 3 ou 4, **caractérisé en ce que** l'étape de durcissement partiel dure moins de 3 minutes.

6. Le procédé selon la revendication 3, 4 ou 5, **caractérisé en ce que** l'étape de durcissement complet dure entre 5 et 30 minutes.

7. Le procédé selon la revendication 6, **caractérisé en ce qu'**il présente une étape d'enlèvement de dispositifs de positionnement des moules après l'étape de durcissement partiel, et avant l'étape de durcissement complet.

8. Le procédé selon la revendication 6 ou 7, **caractérisé en ce que** l'étape de durcissement partiel comprend une irradiation du matériau durcissable (4), de préférence par irradiation depuis un seul côté de l'assemblage des premier et second moules.

9. Le procédé selon la revendication 6, 7 ou 8, **caractérisé en ce que** l'étape de durcissement complet comprend une irradiation du matériau durcissable (4), de préférence par irradiation depuis les deux côtés de l'assemblage des premier et second moules.

10. Le procédé selon l'une des revendications 6, 7 ou 8, **caractérisé en ce que** l'étape de durcissement complet comprend le chauffage du matériau durcissable.

11. Le procédé selon l'une des revendications 1 à 10, **caractérisé en ce que** l'étape de démoulage comprend l'application à l'assemblage des premier et second moule d'un choc thermique.

12. Le procédé selon l'une des revendications 1 à 11, **caractérisé en ce qu'**il présente une étape de fourniture d'un second moule (6) à la forme de la lentille à obtenir.

13. Le procédé selon la revendication 12, **caractérisé en ce que** l'étape de fourniture d'un second moule comprend une étape de détourage du dit moule.

14. Le procédé de l'une des revendications 1 à 13, **caractérisé en ce que** l'étape de moulage comprend le positionnement du premier moule au-dessus du second moule.

15. Le procédé de l'une des revendications 1 à 14, **caractérisé en ce que** l'étape de moulage comprend le positionnement à plat du second moule.

16. Le procédé de l'une des revendications 1 à 15, **caractérisé en ce que** l'étape de moulage comprend :
- la mise en place du second moule;
- la mise en place du premier moule.

17. Le procédé de la revendication 16, **caractérisé en ce que** l'étape de moulage comprend, après la mise en place du second moule, la mise en place du matériau durcissable dans le second moule.

18. Le procédé de la revendication 16, **caractérisé en ce que** l'étape de moulage comprend, après la mise en place du premier moule, l'injection du matériau durcissable entre les moules.

19. Le procédé de la revendication 16, 17 ou 18, **caractérisé en ce que** l'étape de moulage comprend, après la mise en place du second moule, le positionnement d'un joint annulaire.

20. Le procédé d'une des revendications 1 à 18, **caractérisé par** la fourniture, autour du premier moule, d'un joint annulaire.

21. Le procédé de l'une des revendications 1 à 120, **caractérisé en ce que** la lentille est une lentille ophtalmique.

22. Le procédé selon l'une des revendications 1 à 21, **caractérisé en ce que** l'étape de moulage et durcissement comprend une étape d'assemblage des moules suivie d'une étape de durcissement, l'étape d'assemblage des moules comprend l'ajustement de la position des moules de sorte à ce qu'ils soient en contact en un point de la périphérie du premier moule (2), ou à ce qu'il soient à une distance de 1 mm ou moins à la périphérie du premier moule (2).

## Patentansprüche

1. Verfahren zum Gießen von nicht runden Linsen, die an die Verordnung des Trägers und an die Form der vom Träger ausgewählten Fassung angepasst sind, das die folgenden Schritte umfasst:
- Beschaffung einer nicht runden ersten Gießform (2), die im Wesentlichen die Form der herzustellenden Linse aufweist;
- Beschaffung einer zweiten Gießform (6);
- Gießen und Aushärten eines aushärtbaren Materials (4) zwischen der ersten Gießform und einer zweiten Gießform (6);
- Entnahme der fertigen Linse aus der Gießform.

2. Verfahren gemäß Anspruch 1, **dadurch gekennzeichnet, dass** der Schritt der Beschaffung einer ersten Gießform einen Schritt umfasst, in dem die Gießform in Form geschnitten wird.

3. Verfahren gemäß Anspruch 1 oder 2, **dadurch gekennzeichnet, dass** der Schritt des Aushärtens ein Schritt des teilweisen Aushärtens ist, und dass es außerdem einen Schritt des vollständigen Aushärtens der Linse umfasst.

4. Verfahren gemäß Anspruch 1, 2 oder 3, **dadurch gekennzeichnet, dass** der Schritt des Gießens und Aushärtens einen Schritt des Zusammenfügens der Gießformen umfasst, dem ein Schritt des Aushärtens folgt.

5. Verfahren gemäß Anspruch 3 oder 4, **dadurch gekennzeichnet, dass** der Schritt des teilweisen Aushärtens weniger als 3 Minuten dauert.

6. Verfahren gemäß Anspruch 3, 4 oder 5, **dadurch gekennzeichnet, dass** der Schritt des vollständigen Aushärtens zwischen 5 und 30 Minuten dauert.

7. Verfahren gemäß Anspruch 6, **dadurch gekennzeichnet, dass** es nach dem Schritt des teilweisen Aushärtens und vor dem Schritt des vollständigen Aushärtens einen Schritt umfasst, in dem die Positioniervorrichtungen der Gießformen entfernt werden.

8. Verfahren gemäß Anspruch 6 oder 7, **dadurch gekennzeichnet, dass** der Schritt des teilweisen Aushärtens eine Bestrahlung des aushärtbaren Materials (4) umfasst, vorzugsweise eine Bestrahlung, die nur von einer Seite des Gefüges aus erster und zweiter Gießform aus erfolgt.

9. Verfahren gemäß Anspruch 6, 7 oder 8, **dadurch gekennzeichnet, dass** der Schritt des vollständigen Aushärtens eine Bestrahlung des aushärtbaren Materials (4) umfasst, vorzugsweise eine Bestrahlung, die von beiden Seiten des Gefüges aus erster und zweiter Gießform aus erfolgt.

10. Verfahren gemäß einem der Ansprüche 6, 7 oder 8, **dadurch gekennzeichnet, dass** der Schritt des vollständigen Aushärtens das Erhitzen des aushärtbaren Materials umfasst.

11. Verfahren gemäß einem der Ansprüche 1 bis 10, **dadurch gekennzeichnet, dass** der Schritt der Entnahme aus der Gießform einen Temperaturschock beinhaltet, dem das Gefüge aus erster und zweiter Gießform ausgesetzt wird.

12. Verfahren gemäß einem der Ansprüche 1 bis 11, **dadurch gekennzeichnet, dass** es einen Schritt der Beschaffung einer zweiten Gießform (6) aufweist, die die Form der herzustellenden Linse hat.

13. Verfahren gemäß Anspruch 12, **dadurch gekennzeichnet, dass** der Schritt der Beschaffung einer zweiten Gießform einen Schritt umfasst, in dem die Gießform in Form geschnitten wird.

14. Verfahren gemäß einem der Ansprüche 1 bis 13, **dadurch gekennzeichnet, dass** der Schritt des Gießens die Positionierung der ersten Gießform über der zweiten Gießform umfasst.

15. Verfahren gemäß einem der Ansprüche 1 bis 14, **dadurch gekennzeichnet, dass** der Schritt des Gießens die liegende Positionierung der zweiten Gießform umfasst.

16. Verfahren gemäß einem der Ansprüche 1 bis 15, **dadurch gekennzeichnet, dass** der Schritt des Gießens Folgendes umfasst:
- die Aufstellung der zweiten Gießform;
- die Aufstellung der ersten Gießform.

17. Verfahren gemäß Anspruch 16, **dadurch gekennzeichnet, dass** der Schritt des Gießens nach der Aufstellung der zweiten Gießform das Einbringen des aushärtbaren Materials in die zweite Gießform umfasst.

18. Verfahren gemäß Anspruch 16, **dadurch gekennzeichnet, dass** der Schritt des Gießens nach der Aufstellung der ersten Gießform das Einspritzen des aushärtbaren Materials zwischen die Gießformen umfasst.

19. Verfahren gemäß Anspruch 16, 17 oder 18, **dadurch gekennzeichnet, dass** der Schritt des Gießens nach der Aufstellung der zweiten Gießform die Positionierung einer ringförmigen Dichtung umfasst.

20. Verfahren gemäß einem der Ansprüche 1 bis 18, **gekennzeichnet durch** die Beschaffung einer ringförmigen, um die erste Gießform verlaufende Dichtung.

21. Verfahren gemäß einem der Ansprüche 1 bis 20, **dadurch gekennzeichnet, dass** die Linse eine ophthalmische Linse ist.

22. Verfahren gemäß einem der Ansprüche 1 bis 21, **dadurch gekennzeichnet, dass** der Schritt des Gießens und Aushärtens einen Schritt des Zusammenfügens der Gießformen umfasst, dem ein Schritt des Aushärtens folgt, dass der Schritt des Zusammenfügens der Gießformen die Positionskorrektur der Gießformen umfasst, so dass sie sich an einem Punkt des Umfangs der ersten Gießform (2) berühren oder dass der Abstand zum Umfang der ersten Gießform (2) 1 mm oder weniger beträgt.

## Claims

1. A method for molding a lens of noncircular shape adapted to a wearer's prescription and to the shape of the frame chosen by the wearer, comprising the steps of :
- supplying a first non-circular mold (2) which is substantially in the shape of the lens to be obtained;
- supplying a second mold (6);
- molding and curing a setting material (4) between the first mold and a second mold (6) ;
- removing the lens obtained from the mold.

2. The method as claimed in claim 1, **characterized in that** the step of supplying a first mold comprises the step of trimming said mold.

3. The method as claimed in claim 1 or 2, **characterized in that** the curing step is a step of partial curing, and **in that** it also comprises a step of total curing of the lens.

4. The method as claimed in claim 1, 2 or 3, **characterized in that** the step of molding and curing comprises a step of assembling the molds followed by a curing step.

5. The method as claimed in claim 3 or 4, **characterized in that** the partial curing step lasts less than 3 minutes.

6. The method as claimed in claim 3, 4 or 5, **characterized in that** the total curing step lasts between 5 and 30 minutes.

7. The method as claimed in claim 6, **characterized in that** it involves a step of removing mold-positioning devices after the partial curing step and before the total curing step.

8. The method as claimed in claim 6 or 7, **characterized in that** the partial curing step comprises an irradiation of the setting material (4) preferably by irradiation from only one side of the assembly of the first and second molds.

9. The method as claimed in claim 6, 7 or 8, **characterized in that** the total curing step comprises an irradiation of the setting material (4), preferably by irradiation from both sides of the assembly of the first and second molds.

10. The method as claimed in one of claims 6, 7 or 8, **characterized in that** the total curing step comprises the heating of the setting material.

11. The method as claimed in one of claims 1 to 10, **characterized in that** the demolding step comprises the application of a thermal shock to the assembly of the first and second molds.

12. The method as claimed in one of claims 1 to 11, **characterized in that** it involves a step of supplying a second mold (6) in the shape of the lens to be obtained.

13. The method as claimed in claim 12, **characterized in that** the step of supplying a second mold comprises a step of trimming said mold.

14. The method as claimed in one of claims 1 to 13, **characterized in that** the molding step comprises positioning the first mold above the second mold.

15. The method of one of claims 1 to 14, **characterised in that** the molding step comprises positioning the second mold flat.

16. The method of one of Claims 1-15, **characterised in that** the molding step comprises:
- putting the second mold in place;
- putting the first mold in place.

17. The method of claim 16, **characterised in that** the molding step comprises, after putting the second mold in place, the placing of setting material in the second mold.

18. The method of claim 16, **characterised in that** the molding step, after placing the second mold in position, comprises injecting setting material between the molds.

19. The method of claim 16, 17 or 18, **characterised in that** the molding step comprises, after placing the second mold in position, positioning an annular seal.

20. The method of one of claims 1 to 18, **characterised by** the provision, around the first mold, of an annular seal.

21. The method of one of Claims 1-20, **characterised in that** the lens is an ophthalmic lens.

22. The method as claimed in one of claims 1 to 21, **characterized in that** the step of molding and curing comprises a step of assembling molds followed by a curing step, the mold-assembling step comprises the adjustment of the position of the molds such that they are in contact at one point on the periphery of the first mold (2), or such that they are 1 mm or less away from the periphery of the first mold (2).
